# EUROPEAN PATENT SPECIFICATION

(11) **EP 3 120 088 B1**
(45) Date of publication and mention of the grant of the patent: **07.11.2018**
(21) Application number: 15716869.1
(22) Date of filing: 16.03.2015
(51) Int. Cl.: F24S 40/52, F24S 80/525, F24S 50/80, F24S 10/50

(54) **PASSIVE STAGNATION CONTROL FOR SOLAR COLLECTORS**
PASSIVE STAGNATIONSSTEUERUNG FÜR SONNENKOLLEKTOREN
COMMANDE DE STAGNATION PASSIVE POUR COLLECTEURS SOLAIRES

(30) Priority: 17.03.2014 US 201461954208 P
(43) Date of publication of application: 25.01.2017
(73) Proprietor: SABIC Global Technologies B.V., 4612 PX Bergen op Zoom (NL)
(72) Inventor: BROUNNE, Marcel, NL-4612 PX Bergen op Zoom (NL)
(74) Representative: Balder IP Law, S.L.
(86) International application number: PCT/IB2015/051919
(87) International publication number: WO 2015/140698

(56) References cited:
- EP-A1- 2 565 554
- US-A- 4 148 563
- US-A- 4 392 481
- US-A- 4 483 321
- US-B1- 8 047 200

## Description

### BACKGROUND

Solar collectors can be efficient and cost-effective sources of hot water for domestic and commercial hot water heating as well as for space heating. Polymeric solar collectors commonly are constructed from a transparent polymer glazing sheet (e.g., polycarbonate multi-wall sheet), a black polymeric absorber with extruded water channels (e.g., polysulfone or polyphenylene ether blend multi-wall sheet), an insulating backing, and water manifolds and frame pieces. Since the absorber is insulated from both the front and back, temperatures much higher than ambient can be attained. Solar collectors are commonly designed to produce water as hot as 70 degrees Celsius (°C) to 80°C.

There can be periods when the collector is exposed to the sun, but water or other heat transfer fluid is not flowing through the absorber causing the solar collector to overheat. These conditions are termed "stagnation conditions." Absorber temperatures in excess of 130°C or even 140°C are possible during these stagnation conditions. During stagnation conditions, the heat deflection temperature of the plastic components can be exceeded, resulting in irreversible buckling, thermal expansion beyond design limits, and/or other thermally-induced effects that can lead to failure of the unit. Using only polymers capable of withstanding such temperatures greatly increases the cost of the collector. Thus, control of stagnation temperature is an important factor for efficient, cost-effective plastic solar collectors.

Prior art US 4 148 563 A discloses a solar collector according to the preamble of claim 1 and a method for controlling stagnation in a solar collector according to the preamble of claim 9.

Accordingly, there is a need for a solar collector that can help control stagnation temperatures without the need for expensive materials or elaborate controls to provide an efficient, cost-effective polymeric solar collector with a lifetime of greater than 20 years.

### SUMMARY

Disclosed, in various embodiments, are solar collectors, and methods for using the same.

A solar collector, comprises: a solar energy absorbing substrate; a first layer and a second layer above the solar energy absorbing substrate, each of the first layer and the second layer including respective surface features facing one another and defining an interface, the surface features configured to transmit a selected portion of solar energy across the interface when in alignment with one another, characterized in that when the surface features are in alignment with each other the transmission is greater than or equal to 80% measured according to ISO 9060:1990; and an actuator coupled to the solar energy absorbing substrate in thermal communication with the solar energy absorbing substrate, the actuator mechanically coupled with at least one of the first layer and the second layer; wherein, the actuator is configured to receive thermal energy from the solar energy absorbing substrate and wherein the actuator is expanded when the solar collector is exposed to a stagnation temperature to form a gap between the first layer and the second layer to move the first layer and the second layer to move the respective surface features out of alignment with light transmission through the first layer being less than or equal to 10% measured according to ISO 9060:1990.

A method for controlling stagnation in a solar collector, comprising: providing an solar energy absorbing substrate and a first layer; providing a second layer disposed between the first layer and the solar energy absorbing substrate, wherein each of the first layer and the second layer includes respective surface features facing one another and defining an interface, the surface features being configured to transmit a selected portion of solar energy across the interface when in alignment with one another, characterized in that it further comprises coupling an actuator to the solar energy absorbing substrate; and expanding the actuator when the solar collector is exposed to a stagnation temperature to form a gap between the first layer and the second layer, wherein when the surface features are in alignment with one another the light transmission is greater than or equal to 80% measured according to ISO 9060:1990, and when the surface features are out of alignment with one another the light transmission trough the first layer is less than or equal to 10% measured according to ISO 9060:1990.

These and other features and characteristics are more particularly described below.

### BRIEF DESCRIPTION OF THE DRAWINGS

The following is a brief description of the drawings wherein like elements are numbered alike and which are presented for the purposes of illustrating the exemplary embodiments disclosed herein and not for the purposes of limiting the same.
FIG. 1 is a cross-sectional side view of a solar collector.
FIG. 2 is a cross-sectional side view of the solar collector of FIG. 1 at a stagnation temperature.
FIG. 3 is a cross-sectional side view of a solar collector at a stagnation temperature.
FIG. 4 is a cross-sectional side view of a solar collector at a stagnation temperature with a pulley system.
FIG. 5 is a cross-sectional view of various geometric configurations for an interface between components of the solar collector.
FIG. 6 is a cross-sectional side view of a solar thermal collector including an intermediate layer.

### DETAILED DESCRIPTION

Disclosed herein are solar collectors including a light absorber (also referred to herein as "absorber" and "solar energy absorbing substrate") and multiple layers that allow transmission of light when the layers are in contact and prevent transmission of light when the layers are separated. By preventing transmission of light, the solar collectors described herein can advantageously lower the temperature of the light absorber and can assist in preventing stagnation conditions. Separation of the layers can occur by a variety of methods. For example, the light absorber and/or actuator can expand at a stagnation temperature. The expansion of the light absorber and/or actuator can then mechanically separate the layers, reducing the temperature within the solar collector to below the stagnation temperature. In addition, by utilizing thermal expansion of the light absorber and/or actuator, a simple low-cost solution can be obtained without the need for complex assemblies, moving parts, or expensive control systems.

For instance, mechanical louvers could be made to open at elevated temperatures and thereby open the module to release heat, but this introduces moving parts and control systems, increases complexity and cost, and provides additional failure mechanisms. Some concepts using thermo-responsive materials for thermal control can rely on, for example, a phase separation process or an abrupt phase transition, by strongly differing temperature dependencies of the refractive indices of domains and matrix, and/or can rely on a change in their visible optical properties to cause scattering of light and attenuate the amount of light that can reach an solar energy absorbing substrate (e.g., certain hydrogels and polymer blends with critical temperatures for miscibility, liquid crystals, etc.). However, none of these systems are practical or cost-effective for a polymeric solar collector since they involve components that are fluid or involve difficult to tailor and expensive chemical material components.

The solar collectors disclosed herein can include multiple layers (e.g., a multilayer sheet) and a solar energy absorbing substrate (e.g., a light absorbing layer), wherein the multiple layers can be located above solar energy absorbing substrate layer. The multiple layers can generally be transparent (e.g., have greater than or equal to 60 to 80% solar radiation (λ between 300 nanometers (nm) and 2500 nm) transmission) when the layers are joined together, and less than 20% transmission (i.e., opaque) when the layers are separated. The solar energy absorbing substrate can be black, meaning that it will not have any transmission. The solar energy absorbing substrate can absorb incoming light and transfer the energy to a circulating fluid, such as air, water, ethylene glycol, etc. The solar energy absorbing substrate can be made of any material with the desired thermal and hydrolytic stability. Examples include polysulfones, modified poly(phenylene oxides), polyetheretherketone (PEEK), polyimide, and combinations comprising at least one of the foregoing. The multiple layers can include layers made from a single material or each layer can include greater than one material with the different materials having the same light transmission and/or refractive index (e.g., +/- 20%).

The various layers can be designed to include a complimentary geometric configuration to one another at an interface between the multiple layers. For example, the multiple layers can include a complimentary lamellar-shaped construction, triangular-shaped construction, pyramidal-shaped construction, cylindrical-shaped construction, conical-shaped construction, cubical-shaped construction, trapezoidal-shaped construction, sinusoidal-shaped construction, saw tooth-shaped construction, abs(sin)-shaped construction, cycloid-shaped construction, fiber shaped construction, saw tooth-shaped construction, pyramidal-shaped construction, and combinations thereof at the interface between the layers.

The separation of the multiple layers at temperatures at or above the stagnation temperature in combination with the complimentary geometric configuration can assist in reflection of the incoming light, which during stagnation periods, can reduce the temperature extremes experienced by the solar collector, thereby resulting in a lower likelihood of failure (e.g., buckling, warping, thermal expansion, etc.) of the other components of the solar collector. Accordingly, the solar collectors disclosed herein can provide protection to the various other components of the solar collector (i.e., panels) (e.g., solar panels) against failure or damage due to exposure to temperatures above the heat deflection temperature of the components.

An air gap can be present between the multiple layers and the solar energy absorbing substrate with an actuator formed in the air gap. The actuator can, when exposed to temperatures at or above stagnation conditions, expand to push the first layer away from the second layer, creating a gap therebetween. The air gap located between the first layer and the second layer can assist in blocking incoming light from reaching the solar energy absorbing substrate, thereby allowing the solar energy absorbing substrate to return to its pre-stagnation temperature. Once the pre-stagnation temperature has been reached, the actuator can contract, once again bringing the first layer and the second layer back into contact with one another. The air gap can create a refractive index (RI) mismatch between the polymeric material having a RI of, e.g., 1.5 and air having a RI of 1.0. The air gap can be at least as thick as the wavelength of the incoming light. The air gap can be 0.01 to 5 millimeters (mm). The air gap can be 0.05 to 3 mm. The air gap can be 0.1 to 2.0 mm. The air gap can be 0.25 to 1.5 mm.

For example, a solar collector can include a solar energy absorbing substrate; a first layer and a second layer above the solar energy absorbing substrate. The first layer and the second layer can include respective surface features facing one another and can define an interface. The surface features can be configured to transmit a selected portion of solar energy across the interface when in alignment with one another. The transmission can be greater than or equal to 80% as measured according to ISO 9060:1990. The solar collector can include an actuator coupled to the solar energy absorbing substrate in thermal communication with the solar energy absorbing substrate, where the actuator can be mechanically coupled with at least one of the first layer and the second layer. The actuator can be configured to receive thermal energy from the solar energy absorbing substrate and move the first layer and the second layer to move the respective surface features out of alignment. When the surface features are out of alignment with one another, light transmission through the first layer can be less than or equal to 10% as measured according to ISO 9060:1990.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

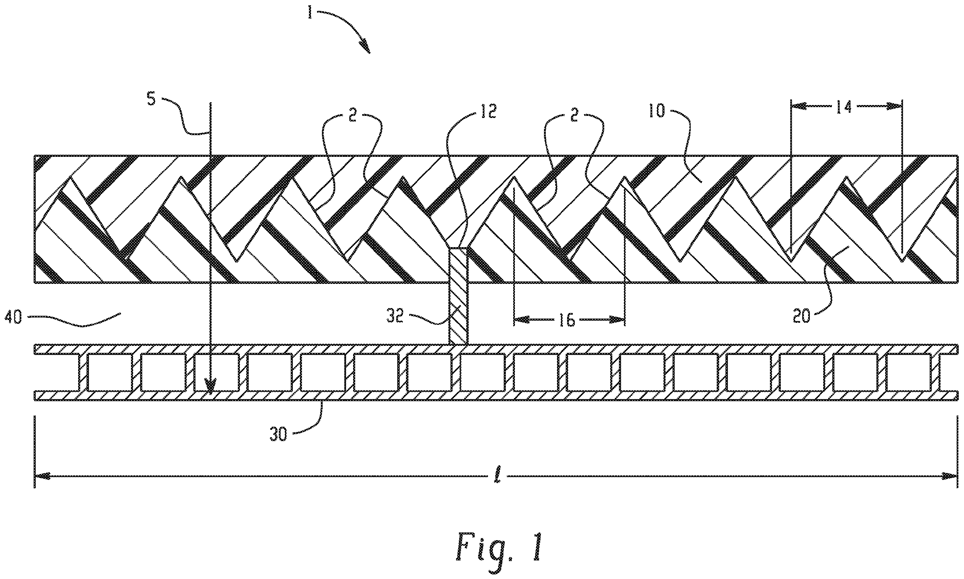

As illustrated in Figure 1, the solar collector 1, can include first layer 10, second layer 20, which, when in contact with one another can include a high light transmission (e.g., greater than or equal to 80% light transmittance). In other words, when not separated from one another, first layer 10 and second layer 20 can act as a single optical body with a high light transmittance as described herein (e.g., optical coupling). When separated, the optical coupling between first layer 10 and second layer 20 is broken, and the first layer 10 can reflect light away from solar energy absorbing substrate 30 through internal reflection. Percent light transmission can be determined according to ISO 9060:1990 using a pyranometer (e.g., a thermopile pyranometer).

For example, when first layer 10 and second layer 20 are in contact (e.g., abutting with no gap therebetween), first layer 10 and second layer 20 can have greater than or equal to 80% transmittance measured according to ISO 9060:1990. When in contact (e.g., abutting with no gap therebetween), first layer 10 and second layer 20 can have greater than or equal to 85% transmittance measured according to ISO 9060:1990. When in contact (e.g., abutting with no gap therebetween), first layer 10 and second layer 20 can have greater than or equal to 90% transmittance measured according to ISO 9060:1990.

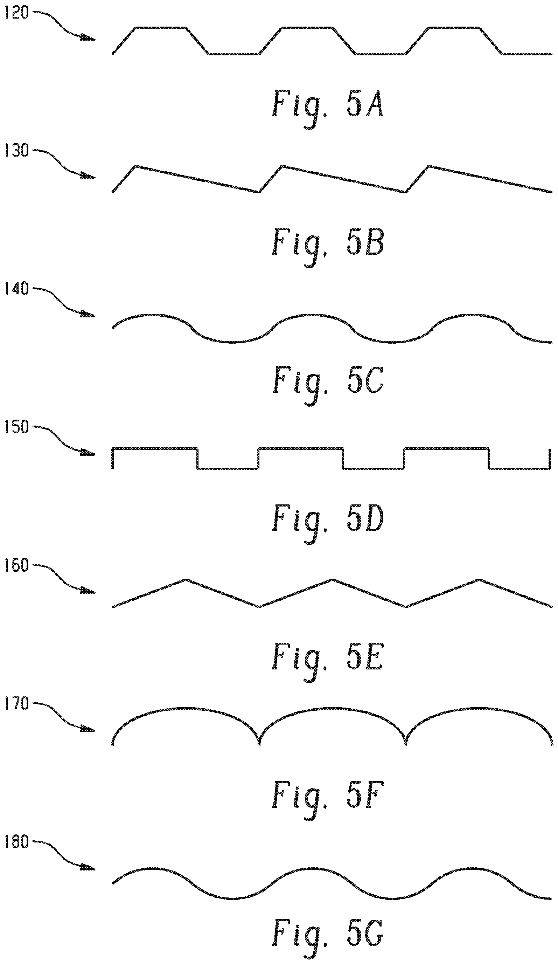

As shown in FIG. 1, first layer 10 and second layer 20 can include a complementary saw tooth construction at the interface 2 between the layers. FIG. 5 illustrates some of the complimentary geometric configurations that first layer 10 and second layer 20 can include at the interface 2 between the layers. For example, the complimentary geometric configurations can include trapezoidal-shaped configurations 120. The complimentary geometric configurations can include saw tooth-shaped configurations 130. The complimentary geometric configurations can include sinusoidal-shaped configurations 140. The complimentary geometric configurations can include lamellar-shaped configurations 150. The complimentary geometric configurations can include triangular-shaped configurations 160. The complimentary geometric configurations can include abs(sin)-shaped configurations 170. The complimentary geometric configurations can include cycloid-shaped configurations 180.

As shown in FIG. 1, light beam 5 can pass through first layer 10 and second layer 20 and air gap 40 to provide energy to solar energy absorbing substrate 30. Actuator 32 can be coupled to solar energy absorbing substrate 30. In addition, multiple actuators (i.e., greater than one) can be included. For example, an array of actuators can be utilized where the array of actuators can be dispersed across a length, *l*, of the solar collector. As used herein, coupled refers to joining through mechanical joining (e.g., welding, and/or fastener(s)) and/or chemical joining (e.g., adhesive, glue, etc.). Actuator 32 can be made from the same material as that of solar energy absorbing substrate 30, thereby having the same coefficient of thermal expansion as solar energy absorbing substrate 30. Actuator 32 can also be made from a different material than that of solar energy absorbing substrate 30 where the material has a coefficient of thermal expansion that is greater than or equal to that of solar energy absorbing substrate 30. Actuator 32 and solar energy absorbing substrate 30 can optionally include fillers that increase the coefficient of thermal expansion, as set forth in U.S. Patent No. 8,552,101, which is incorporated herein by reference in its entirety. For example, the fillers can include an intrinsic thermal conductivity greater than or equal to 50 W/mK. Suitable fillers include: AlN (Aluminum nitride), BN (Boron nitride), MgSiN₂ (Magnesium silicon nitride), SiC (Silicon carbide), Ceramic-coated graphite, Graphite, Expanded graphite, Graphene, Carbon fiber, Carbon nanotube (CNT), or Graphitized carbon black, or combinations thereof.

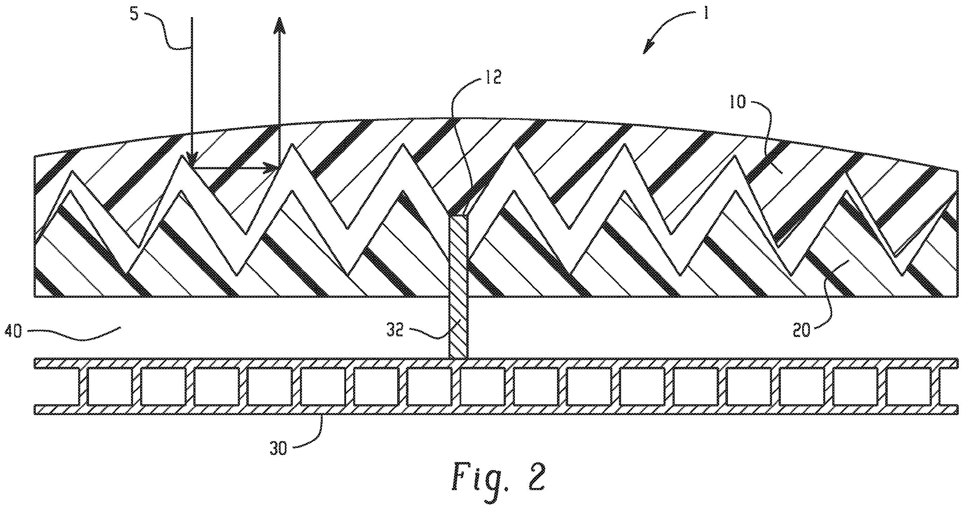

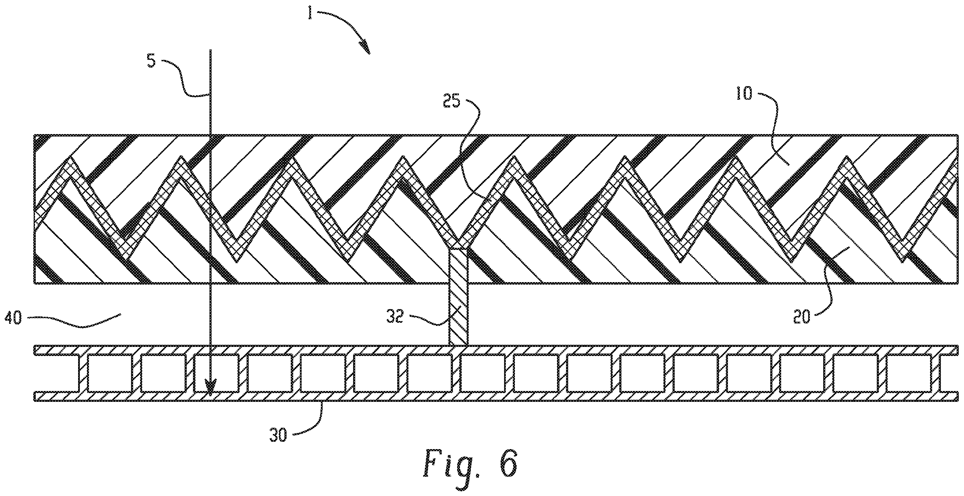

As illustrated in FIGS. 1 and 2, at or above a stagnation temperature, actuator 30 can expand to contact first layer 10 at contact area 12 to separate first layer 10 and second layer 20 and create gap 15 therebetween first layer 10 and second layer 20. Gap 15 can be greater than or equal to 2500 nm. Gap 15 can be greater than or equal to 0.1 mm. Gap 15 can be greater than or equal to 0.5 mm. Gap 15 can be 0.05 to 5 mm. Gap 15 can be greater than or equal to 0.075 to 3 mm. Gap 15 can be 0.1 to 2 mm. Gap 15 can be 0.25 to 1.5 mm. As shown in FIG. 6, an intermediate layer 25 can be positioned at the interface of first layer 10 and second layer 20. Intermediate layer 25 can function as an adhesive layer to assist in holding the first layer 10 and second layer 20 together during conditions below the stagnation temperature. Intermediate layer 25 can have a refractive index similar to first layer 10 and second layer 20. For example, the refractive index of intermediate layer 25 can be within 10% of the refractive index of first layer 10 and second layer 20. The refractive index of intermediate layer 25 can be within 5% of the refractive index of first layer 10 and second layer 20. The refractive index of intermediate layer 25 can be within 4% of the refractive index of first layer 10 and second layer 20. The refractive index of intermediate layer 25 can be within 3% of the refractive index of first layer 10 and second layer 20. The refractive index of intermediate layer 25 can be within 2% of the refractive index of first layer 10 and second layer 20. In addition, intermediate layer 25 can include a light transmission identical to the light transmission of first layer 10 and second layer 20. Intermediate layer 25 can have a geometric configuration complementary to both first layer 10 and second layer 20 such that when positioned together (e.g., below stagnation temperature) there is no gap between first layer 10, intermediate layer 25, and second layer 20.

When actuator 32 pushes first layer 10 and second layer 20 apart at a stagnation temperature of the solar collector 1, intermediate layer 25 can remain attached to either first layer 10 or second layer 20. Depending on the materials of the solar collector, during stagnation, the solar energy absorbing substrate can reach temperatures of greater than or equal to 110°C. The solar energy absorbing substrate can reach temperatures of greater than or equal to 120°C during stagnation. The solar energy absorbing substrate can reach temperatures of greater than or equal to 130°C during stagnation. The solar energy absorbing substrate can reach temperatures of greater than or equal to 140°C during stagnation. The solar energy absorbing substrate can reach temperatures of greater than or equal to 150°C during stagnation. The solar energy absorbing substrate can reach temperatures of greater than or equal to 160°C during stagnation.

As shown in FIG. 2, when gap 15 is present between first layer 10 and second layer 20, light beam 5 reflects within first layer 10 such that a total internal reflection is observed, (e.g., no light passes through to solar energy absorbing substrate 30), allowing solar energy absorbing substrate 30 to cool and return to a non-stagnation temperature. Gap 15 can act as a stopper to prevent light from reaching the solar energy absorbing substrate 30 and thus, can allow the solar energy absorbing substrate to return to non-stagnation temperature. In the alternative, when the layers 10, 20 are separated by gap 15 at stagnation temperature, less than or equal 20% of light can be transmitted to solar energy absorbing substrate 30, which can also allow for a reduction in the temperature of solar energy absorbing substrate 30 to a pre-stagnation state. When the layers 10, 20 are separated by gap 15, less than 15% of light can be transmitted to solar energy absorbing substrate 30. When the layers 10, 20 are separated by gap 15, less than 10% of light can be transmitted to solar energy absorbing substrate 30. When the layers 10, 20 are separated by gap 15, less than 5% of light can be transmitted to solar energy absorbing substrate 30. When the layers 10, 20 are separated by gap 15, less than 2.5% of light can be transmitted to solar energy absorbing substrate 30. When the layers 10, 20 are separated by gap 15, less than 1.0% of light can be transmitted to solar energy absorbing substrate 30. As solar energy absorbing substrate 30 and actuator 32 cool and contract, first layer 10 can be brought back into contact with second layer 20 (or intermediate layer 25 if intermediate layer 25 remains joined to second layer 20), which can allow light beam 5 to transmit to solar energy absorbing substrate 30 (as shown in FIG. 1).

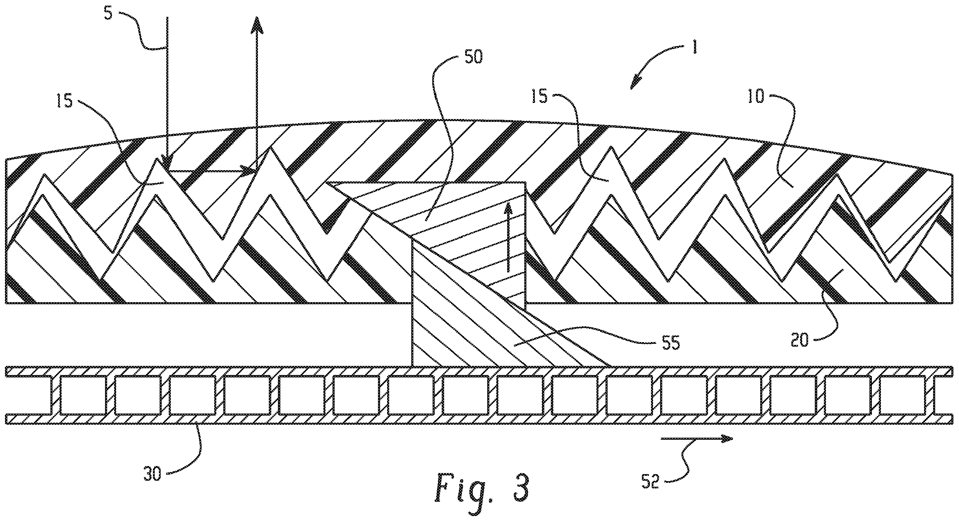

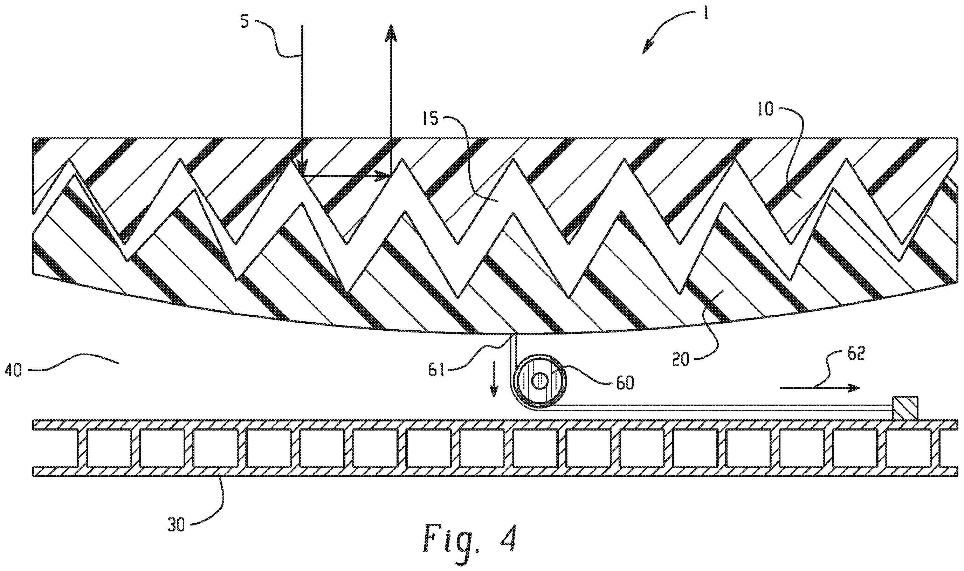

Alternative methods of creating gap 15 are shown in FIGS. 3 and 4. For example, FIG. 3 illustrates a mechanism that can include first wedge 50 coupled to first layer 10 and second wedge 55 coupled to solar energy absorbing substrate 30. As solar energy absorbing substrate 30 reaches a stagnation temperature and expands laterally, second wedge 55 can move laterally with respect to first wedge 50 illustrated by arrow 52 in FIG. 3, which can force first wedge 50 vertically along a slope of second wedge 55. Thus, first wedge 50 can force first layer 10 to separate from second layer 20, thereby creating gap 15. As previously discussed herein, gap 15 can prevent transmittance of light beam 5, which can allow solar energy absorbing substrate 30 to cool and contract. The contraction of solar energy absorbing substrate 30 can allow second wedge 55 to move back to its pre-stagnation position, which can allow first wedge 50 to slide down the slope of second wedge 55. As first wedge 55 assumes its pre-stagnation position, first layer 10 can be brought back into contact with second layer 20 (or intermediate layer 25 if intermediate layer 25 remains joined to second layer 20), which can allow light beam 5 to transmit to solar energy absorbing substrate 30 (as shown in FIG. 1).

FIG. 4 illustrates another actuator mechanism including a pulley system 60 that can be coupled to second layer 20 at connection 61, and solar energy absorbing substrate 30 at connection 62. As solar energy absorbing substrate 30 reaches a stagnation temperature, it can expand laterally. When this occurs, the position of connection 62 can be moved in the direction of arrow 54 in FIG. 4. Thus, pulley system 60 can draw second layer 20 vertically downward and away from first layer 10 thereby creating gap 15. As previously discussed herein, gap 15 can prevent transmittance of light beam 5, which can allow solar energy absorbing substrate 30 to cool and contract. The contraction of solar energy absorbing substrate 30 can allow connection 62 to return to its pre-stagnation position, which can allow for second layer 20 to reunite with first layer 10 (or intermediate layer 25 if intermediate layer 25 remains joined to second layer 20), which can allow light beam 5 to once again transmit light to solar energy absorbing substrate 30 (as shown in FIG. 1).

Possible polymeric materials that can be employed for the first layer 10, second layer 20, and solar energy absorbing substrate 30 can include any transparent homopolymer, copolymer, or blend thereof. It can be desirable for the polymeric materials to have optical transparency and stability toward light and heat. Examples of desirable polymers include polyesters, polycarbonates, polystyrene, poly(methyl methacrylate) (PMMA), poly(ethyl methacrylate), poly(styrene-co-methyl methacrylate), poly(styrene-co-acrylonitrile) (SAN), poly(methyl methacrylate-co-styrene-co-acrylonitrile) (MMASAN), and other copolymers of styrene, acrylonitrile, various (meth)acrylic acids, and various (meth)acrylates, as well as combinations comprising at least one of the foregoing. The first layer 10, second layer 20, and solar energy absorbing substrate 30 can be made from the same or different material or any combination therebetween.

Possible polymeric materials that can be employed for the intermediate layer 25 can include silicone based materials including a curable silicone (such as a silicone thermoset elastomer (TSE), a UV curable silicone, thermoplastic polyolefin (TPO), thermoplastic polyurethane (TPU), ethylene tetrafluoroethylene (ETFE), polyvinylidene fluoride (PVDF), ethylene vinyl acetate (EVA), or a room temperature vulcanize (RTV) silicone.

The refractive index of the polymeric material used for the first layer 10, second layer 20 and/or solar energy absorbing substrate 30 can be 0.5 to 2.5. The refractive index of the polymeric material used for the first layer 10, second layer 20 and/or solar energy absorbing substrate 30 can be 1.0 to 2.0. The refractive index of the polymeric material used for the first layer 10, second layer 20 and/or solar energy absorbing substrate 30 can be 1.25 to 1.75. The polymeric material used for the first layer 10, second layer 20, and/or solar energy absorbing substrate 30 can have a total forward transmission of greater than or equal to 80%. The polymeric material can have a total forward transmission of greater than or equal to 85%. The refractive index of the polymeric material can have a total forward transmission of greater than or equal to 90%. The light transmission of the polymeric material can be 60% to 100%. The light transmission of the polymeric material can be 65% to 90%. The light transmission of the polymeric material can be 75% to 85%. Forward transmission refers to all light emanating from the non-irradiated surface of the article, i.e., all light that is not reflected, absorbed, or transmitting over the edges. Forward transmission includes both direct transmission along the normal line as well as any light scattered off-normal (haze). Measurement of total forward transmission (or total reflection) is usually accomplished with the use of a spectrometer equipped with an integrating sphere. The polymeric material can also include various additives ordinarily incorporated into polymer compositions of this type, with the proviso that the additive(s) are selected so as to not significantly adversely affect the desired properties of the layers, in particular, the ability to transmit or reflect incoming light. Examples of additives that can be included in the matrix polymer or the thermo-responsive layer include optical effects fillers, impact modifiers, fillers, reinforcing agents, antioxidants, heat stabilizers, light stabilizers, ultraviolet (UV) light stabilizers, plasticizers, lubricants, mold release agents, antistatic agents, colorants (such as carbon black and organic dyes), surface effect additives, radiation stabilizers (e.g., infrared absorbing), gamma stabilizers, flame retardants, and anti-drip agents. A combination of additives can be used, for example a combination of a heat stabilizer, mold release agent, and ultraviolet light stabilizer. In general, the additives are used in the amounts generally known to be effective. Each of these additives can be present in amounts of 0.0001 to 10 weight percent (wt.%), based on the total weight of the polymeric material.

For example, plasticizing agents can be used to adjust the refractive index and additives such as antioxidants and light stabilizers can also be present in the polymeric material. Plasticizers for inclusion in the polymeric material can include benzoate esters of polyols such as penterythritol tetrabenzoate, aliphatic esters, and aryl esters of phosphates such as resorcinol bis(diphenyl phosphate), as well as combinations comprising at least one of the foregoing.

The polymeric material can further optionally include a flame retardant. Flame retardants include organic and/or inorganic materials. Organic compounds include, for example, phosphorus, sulfonates, and/or halogenated materials (e.g., comprising bromine chlorine, and so forth, such as brominated polycarbonate). Non-brominated and non-chlorinated phosphorus-containing flame retardant additives can be preferred in certain applications for regulatory reasons, for example organic phosphates and organic compounds containing phosphorus-nitrogen bonds.

Inorganic flame retardants include, for example, C₁₋₁₆ alkyl sulfonate salts such as potassium perfluorobutane sulfonate (Rimar salt), potassium perfluorooctane sulfonate, tetraethyl ammonium perfluorohexane sulfonate, and potassium diphenylsulfone sulfonate (e.g., KSS); salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, inorganic flame retardant salts are present in amounts of 0.01 to 10 parts by weight, more specifically 0.02 to 1 parts by weight, based on 100 parts by weight of the polymeric material.

Light stabilizers and/or ultraviolet light (UV) absorbing stabilizers can also be used. Exemplary UV light absorbing stabilizers include hydroxybenzophenones; hydroxybenzotriazoles; hydroxyphenyl triazines (e.g., 2-hydroxyphenyl triazines); cyanoacrylates; oxanilides; benzoxazinones; dibenzoylresorcinols; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2-[4,6-diphenyl-1.3.5-triazin-2-yl]-5-(hexyloxy)-phenol (Tinuvin 1577), 2,2'-(1,4-phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; 4,6-dibenzoylresorcinol, nano-size inorganic materials such as titanium oxide, cerium oxide, and zinc oxide, all with a particle size of less than or equal to 100 nanometers, or combinations comprising at least one of the foregoing UV light absorbing stabilizers. UV light absorbing stabilizers are used in amounts of 0.01 to 5 parts by weight, based on 100 parts by weight of the total composition, excluding any filler.

Anti-drip agents can also be used in the polymeric material, for example a fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An exemplary TSAN includes 50 wt.% PTFE and 50 wt.% SAN, based on the total weight of the encapsulated fluoropolymer. The SAN can include, for example, 75 wt.% styrene and 25 wt.% acrylonitrile based on the total weight of the copolymer. Anti-drip agents can be used in amounts of 0.1 to 10 parts by weight, based on 100 parts by weight of the total composition of the particular layer, excluding any filler.

The first layer 10, second layer 20, and intermediate layer 25 can be fabricated by any means including solvent casting, melt casting, extrusion, blow molding, injection molding or co-extrusion onto a substrate.

The thickness of the layers (first layer 10, second layer 20, and intermediate layer 25) of the solar collector can vary depending upon the thickness of the individual components of solar collector. For example, the thickness of the layers can be 25 µm to 2,500 µm. The thickness of the layers can be 100 µm to 1,250 µm. The thickness of the layers can be 250 µm to 1,000 µm. The thickness of the solar energy absorbing substrate can be 1 mm to 55 mm. The thickness of the solar energy absorbing substrate can be 2 mm to 35 mm. The thickness of the solar energy absorbing substrate can be 2 mm to 25 mm. The thickness of the solar energy absorbing substrate can be 3 mm to 15 mm.

The thermo-responsive assemblies can likewise be used in any application where, for example, it is desirable to regulate temperature based on light reflection (such as in solar panels, in photovoltaic applications, and in greenhouse applications). The layers of the solar collector (i.e., first layer 10, second layer 20, and/or intermediate layer 25) can be applied to a window (such as a vehicle window and a building window, for example, a greenhouse window, an office window, and a house window). The window can be glass and/or polymeric.

The solar collectors as described herein are further illustrated by the following non-limiting examples.

It is to be understood that the materials and methods are not limited to those disclosed herein and used in the examples. One skilled in the art will readily be able to select suitable polymeric materials and variations of methods to separate the layers to reflect light or reduce transmission to the solar energy absorbing substrate.

Set forth below are some embodiments of solar collectors and methods of making the collectors as disclosed herein.

Embodiment 1: A solar collector, comprising: a solar energy absorbing substrate; a first layer and a second layer above the solar energy absorbing substrate, each of the first layer and the second layer including respective surface features facing one another and defining an interface, the surface features configured to transmit a selected portion of solar energy across the interface when in alignment with one another, the transmission being greater than or equal to 80% measured according to ISO 9060:1990; and an actuator coupled to the solar energy absorbing substrate in thermal communication with the solar energy absorbing substrate, the actuator mechanically coupled with at least one of the first layer and the second layer; wherein, the actuator is configured to receive thermal energy from the solar energy absorbing substrate and move the first layer and the second layer to move the respective surface features out of alignment with light transmission through the first layer being less than or equal to 10% measured according to ISO 9060:1990.

Embodiment 2: The solar collector of Embodiment 1, wherein the respective surface features comprise complementary geometric configurations at the interface between the first layer and second layer.

Embodiment 3: The solar collector of any of Embodiments 1 or 2, wherein each geometric configuration includes at least one of trapezoidal, saw-tooth, sinusoidal, lamellar, triangular, abs(sin), cycloid, and pyramidal geometric configurations.

Embodiment 4: The solar collector of any of Embodiments 1-3, further comprising an intermediate layer located between the first layer and second layer, wherein the intermediate layer comprises a material having a light transmission equal to the light transmission of the first layer.

Embodiment 5: The solar collector of any of Embodiments 1-4, wherein the actuator and the solar energy absorbing substrate have identical coefficients of thermal expansion, wherein the actuator has a coefficient of thermal expansion greater than the coefficient of thermal expansion of the solar energy absorbing substrate.

Embodiment 6: The solar collector of any of Embodiments 1-5, wherein the light transmission through the first layer and the second layer is less than or equal to 5% measured according to ISO 9060:1990 at the stagnation temperature.

Embodiment 7: The solar collector of any of Embodiments 1-6, wherein the first layer and the second layer comprise a polymeric material selected from polyester, polycarbonate, polystyrene, poly(methyl methacrylate), poly(styrene-co-methyl methacrylate), poly(styrene-co-acrylonitrile), poly(methyl methacrylate-co-styrene-co-acrylonitrile), and combinations comprising at least one of the foregoing.

Embodiment 8: The solar collector of any of Embodiments 1-7, further comprising an air gap between the second layer and the solar energy absorbing substrate, wherein the actuator is located in the air gap.

Embodiment 9: A method for controlling stagnation in a solar collector, comprising: providing a solar energy absorbing substrate and a first layer; providing a second layer disposed between the first layer and the solar energy absorbing substrate; coupling an actuator to the solar energy absorbing substrate; and expanding the actuator when the solar collector is exposed to a stagnation temperature to form a gap between the first layer and the second layer, wherein each of the first layer and the second layer include respective surface features facing one another and defining an interface, the surface features configured to transmit a selected portion of solar energy across the interface when in alignment with one another, the transmission being greater than or equal to 80% measured according to ISO 9060:1990, and wherein when the surface features of the first layer and the second layer are moved out of alignment, light transmission through the first layer is less than or equal to 10% measured according to ISO 9060:1990.

Embodiment 10: The method of Embodiment 9, wherein the respective surface features of the first layer and second layer comprise complementary geometric configurations at the interface between the first layer and second layer.

Embodiment 11: The method of any of Embodiments 9-10, wherein the actuator and the solar energy absorbing substrate comprise identical coefficients of thermal expansion.

Embodiment 12: The method of any of Embodiments 9-11, wherein the light transmission through the first layer and the second layer, when the surface features are in direct contact with one another, is greater than or equal to 80% transmission measured according to ISO 9060:1990.

Embodiment 13: The method of any of Embodiments 9-12, wherein the light transmission through the first layer and the second layer at the stagnation temperature is less than or equal to 5% transparency measured according to ISO 9060:1990.

Embodiment 14: The method of any of Embodiments 9-13, wherein the first layer and the second layer comprise a polymeric material selected from polyester, polycarbonate, polystyrene, poly(methyl methacrylate), poly(styrene-co-methyl methacrylate), poly(styrene-co-acrylonitrile), poly(methyl methacrylate-co-styrene-co-acrylonitrile), and combinations comprising at least one of the foregoing.

Embodiment 15: The method of any of Embodiments 9-14, further comprising providing an air gap between the second layer and the solar energy absorbing substrate, further comprising locating the actuator in the air gap.

All ranges disclosed herein are inclusive of the endpoints, and the endpoints are independently combinable with each other (e.g., ranges of "up to 25 wt.%, or, more specifically, 5 wt.% to 20 wt.%," is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to determine one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment", "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A solar collector (1), comprising:
a solar energy absorbing substrate (30);
a first layer (10) and a second layer (20) above the solar energy absorbing substrate (30), each of the first layer (10) and the second layer (20) including respective surface features (14,16) facing one another and defining an interface (2), the surface features (14,16) configured to transmit a selected portion of solar energy across the interface when in alignment with one another, **characterized in that** when the surface features (14,16) are in alignment with each other the transmission is greater than or equal to 80% measured according to ISO 9060:1990; and
an actuator (32) coupled to the solar energy absorbing substrate (30) in thermal communication with the solar energy absorbing substrate (30), the actuator (32) mechanically coupled with at least one of the first layer (10) and the second layer (20);
wherein, the actuator (32) is configured to receive thermal energy from the solar energy absorbing substrate (30) and wherein the actuator is expanded when the solar collector (1) is exposed to a stagnation temperature to form a gap (15) between the first layer (10) and the second layer (20) to move the respective surface features (14,16) out of alignment with light transmission through the first layer (10) being less than or equal to 10% measured according to ISO 9060:1990.

2. The solar collector (1) of Claim 1, wherein the respective surface features (14,16) comprise complementary geometric configurations at the interface (2) between the first layer (10) and second layer (20).

3. The solar collector (1) of any of Claims 1 or 2, wherein each geometric configuration includes at least one of trapezoidal (120), saw-tooth, sinusoidal (140), lamellar (150), triangular (160), abs(sin) (170), cycloid (180), and pyramidal geometric configurations.

4. The solar collector (1) of any of Claims 1-3, further comprising an intermediate layer (25) located between the first layer (10) and second layer (20),
wherein the intermediate layer (25) comprises a material having a light transmission equal to the light transmission of the first layer (10).

5. The solar collector (1) of any of Claims 1-4, wherein the actuator (32) and the solar energy absorbing substrate (30) have identical coefficients of thermal expansion or
wherein the actuator (32) has a coefficient of thermal expansion greater than the coefficient of thermal expansion of the solar energy absorbing substrate (30).

6. The solar collector (1) of any of Claims 1-5, wherein the light transmission through the first layer (10) and the second layer (20) is less than or equal to 5% measured according to ISO 9060:1990 at the stagnation temperature.

7. The solar collector (1) of any of Claims 1-6, wherein the first layer (10) and the second layer (20) comprise a polymeric material selected from polyester, polycarbonate, polystyrene, poly(methyl methacrylate), poly(styrene-co-methyl methacrylate), poly(styrene-co-acrylonitrile), poly(methyl methacrylate-co-styrene-co-acrylonitrile), and combinations comprising at least one of the foregoing.

8. The solar collector (1) of any of Claims 1-7, further comprising an air gap (40) between the second layer (20) and the solar energy absorbing substrate (30)
wherein the actuator (32) is located in the air gap (40).

9. A method for controlling stagnation in a solar collector (1), comprising:
providing an solar energy absorbing substrate (30) and a first layer (10);
providing a second layer (20) disposed between the first layer (10) and the solar energy absorbing substrate (30); wherein each of the first layer (10) and the second layer (20) includes respective surface features (14,16) facing one another and defining an interface (2), the surface features (14,16) being configured to transmit a selected portion of solar energy across the interface (2) when in alignment with one another, **characterized in that** it further comprises coupling an actuator (32) to the solar energy absorbing substrate (30); and **in that** the actuator (32) is expanded when the solar collector (1) is exposed to a stagnation temperature to form a gap (15) between the first layer (10) and the second layer (20), wherein when said surface features (14,16) are in alignment with one another, the transmission is greater than or equal to 80% measured according to ISO 9060:1990, and wherein when the surface features (14,16) of the first layer (10) and the second layer (20) are moved out of alignment, light transmission through the first layer (10) is less than or equal to 10% measured according to ISO 9060:1990.

10. The method of Claim 9, wherein the respective surface features (14,16) of the first layer (10) and second layer (20) comprise complementary geometric configurations at the interface (2) between the first layer (10) and second layer (20).

11. The method of any of Claims 9-10, wherein the actuator (32) and the solar energy absorbing substrate (30) comprise identical coefficients of thermal expansion.

12. The method of any of Claims 9-11, wherein the light transmission through the first layer (10) and the second layer (20), when the surface features are in direct contact with one another, is greater than or equal to 80% transmission measured according to ISO 9060:1990.

13. The method of any of Claims 9-12, wherein the light transmission through the first layer (10) and the second layer (20) at the stagnation temperature is less than or equal to 5% transparency measured according to ISO 9060:1990.

14. The method of any of Claims 9-13, wherein the first layer (10) and the second layer (20) comprise a polymeric material selected from polyester, polycarbonate, polystyrene, poly(methyl methacrylate), poly(styrene-co-methyl methacrylate), poly(styrene-co-acrylonitrile), poly(methyl methacrylate-co-styrene-co-acrylonitrile), and combinations comprising at least one of the foregoing.

15. The method of any of Claims 9-14, further comprising providing an air gap (40) between the second layer (20) and the solar energy absorbing substrate (30), further comprising locating the actuator (32) in the air gap (40).

## Patentansprüche

1. Solarkollektor (1), umfassend:
ein Solarenergie absorbierendes Substrat (30);
eine erste Schicht (10) und eine zweite Schicht (20) über dem Solarenergie absorbierenden Substrat (30), wobei jede der ersten Schicht (10) und der zweiten Schicht (20) entsprechende Oberflächenmerkmale (14, 16) aufweist, die einander zugewandt sind und eine Schnittstelle (2) definieren, wobei die Oberflächenmerkmale (14, 16) konfiguriert sind, um einen ausgewählten Teil der Solarenergie über die Schnittstelle zu übertragen, wenn sie zueinander ausgerichtet sind, **dadurch gekennzeichnet, dass**, wenn die Oberflächenmerkmale (14, 16) miteinander ausgerichtet sind, die Transmission größer oder gleich 80% ist, gemessen nach ISO 9060:1990; und
ein Aktuator (32), der mit dem Solarenergie absorbierenden Substrat (30) in thermischer Verbindung mit dem Solarenergie absorbierenden Substrat (30) gekoppelt ist, wobei der Aktuator (32) mechanisch mit mindestens einer der ersten Schicht (10) und der zweiten Schicht (20) gekoppelt ist;
wobei der Aktuator (32) so konfiguriert ist, dass er thermische Energie von dem Solarenergie absorbierenden Substrat (30) empfängt, und wobei der Aktuator expandiert wird, wenn der Solarkollektor (1) einer Stagnationstemperatur ausgesetzt wird, um einen Spalt (15) zwischen der ersten Schicht (10) und der zweiten Schicht (20) zu bilden, um die jeweiligen Oberflächenmerkmale (14, 16) aus der Ausrichtung heraus zu bewegen, mit einer Lichttransmission durch die erste Schicht (10) von kleiner oder gleich 10%, gemessen nach ISO 9060:1990.

2. Solarkollektor (1) nach Anspruch 1, wobei die jeweiligen Oberflächenmerkmale (14, 16) komplementäre geometrische Konfigurationen an der Schnittstelle (2) zwischen der ersten Schicht (10) und der zweiten Schicht (20) aufweisen.

3. Solarkollektor (1) nach einem der Ansprüche 1 oder 2, wobei jede geometrische Konfiguration mindestens eine von trapezförmigen (120), sägezahnförmigen, sinusförmigen (140), lamellaren (150), dreieckigen (160), abs(sin) (170), zykloidenförmigen (180) und pyramidenförmigen geometrischen Konfigurationen umfasst.

4. Solarkollektor (1) nach einem der Ansprüche 1-3, ferner umfassend eine Zwischenschicht (25), die zwischen der ersten Schicht (10) und der zweiten Schicht (20) angeordnet ist, wobei die Zwischenschicht (25) ein Material mit einer Lichttransmission umfasst, die gleich der Lichttransmission der ersten Schicht (10) ist.

5. Solarkollektor (1) nach einem der Ansprüche 1-4, wobei der Aktuator (32) und das Solarenergie absorbierende Substrat (30) identische Wärmeausdehnungskoeffizienten aufweisen oder wobei der Aktuator (32) einen Wärmeausdehnungskoeffizienten aufweist, der größer ist als der Wärmeausdehnungskoeffizient des Solarenergie absorbierenden Substrats (30).

6. Solarkollektor (1) nach einem der Ansprüche 1-5, wobei die Lichttransmission durch die erste Schicht (10) und die zweite Schicht (20) kleiner oder gleich 5% ist, gemessen nach ISO 9060:1990 bei der Stagnationstemperatur.

7. Solarkollektor (1) nach einem der Ansprüche 1-6, wobei die erste Schicht (10) und die zweite Schicht (20) ein polymeres Material umfassen, das aus Polyester, Polycarbonat, Polystyrol, Poly(methyl methacrylat), Poly(styrol-co-methylmethacrylat), Poly(styrol-co-acrylnitril), Poly(methyl methacrylat-co-styrol-co-acrylnitril) und Kombinationen, die mindestens eines der vorgenannten Materialien umfassen, ausgewählt ist.

8. Solarkollektor (1) nach einem der Ansprüche 1-7, ferner umfassend einen Luftspalt (40) zwischen der zweiten Schicht (20) und dem Solarenergie absorbierenden Substrat (30), wobei der Aktuator (32) in dem Luftspalt (40) angeordnet ist.

9. Verfahren zur Steuerung der Stagnation in einem Solarkollektor (1), umfassend:
Bereitstellen eines Solarenergie absorbierenden Substrats (30) und einer ersten Schicht (10);
Bereitstellen einer zweiten Schicht (20), die zwischen der ersten Schicht (10) und dem Solarenergie absorbierenden Substrat (30) angeordnet ist; wobei jede der ersten Schicht (10) und der zweiten Schicht (20) entsprechende Oberflächenmerkmale (14, 16) aufweist, die einander zugewandt sind und eine Schnittstelle (2) definieren, wobei die Oberflächenmerkmale (14, 16) konfiguriert sind, um einen ausgewählten Teil der Solarenergie über die Schnittstelle (2) zu übertragen, wenn sie zueinander ausgerichtet sind, **dadurch gekennzeichnet, dass** es weiterhin Folgendes umfasst
Kopplung eines Aktuators (32) an das Solarenergie absorbierende Substrat (30); und
dass der Aktuator (32) expandiert wird, wenn der Solarkollektor (1) einer Stagnationstemperatur ausgesetzt wird, um einen Spalt (15) zwischen der ersten Schicht (10) und der zweiten Schicht (20) zu bilden, wobei, wenn die Oberflächenmerkmale (14, 16) zueinander ausgerichtet sind, die Transmission größer oder gleich 80% ist, gemessen gemäß ISO 9060:1990,
und wobei, wenn die Oberflächenmerkmale (14, 16) der ersten Schicht (10) und der zweiten Schicht (20) aus der Ausrichtung bewegt werden, die Lichttransmission durch die erste Schicht (10) kleiner oder gleich 10% ist, gemessen nach ISO 9060:1990.

10. Verfahren nach Anspruch 9, wobei die jeweiligen Oberflächenmerkmale (14, 16) der ersten Schicht (10) und der zweiten Schicht (20) komplementäre geometrische Konfigurationen an der Schnittstelle (2) zwischen der ersten Schicht (10) und der zweiten Schicht (20) aufweisen.

11. Verfahren nach einem der Ansprüche 9-10, wobei der Aktuator (32) und das Solarenergie absorbierende Substrat (30) identische Wärmeausdehnungskoeffizienten aufweisen.

12. Verfahren nach einem der Ansprüche 9-11, wobei die Lichttransmission durch die erste Schicht (10) und die zweite Schicht (20), wenn die Oberflächenmerkmale in direktem Kontakt miteinander stehen, größer oder gleich 80% Transmission, gemessen nach ISO 9060:1990, ist.

13. Verfahren nach einem der Ansprüche 9-12, wobei die Lichttransmission durch die erste Schicht (10) und die zweite Schicht (20) bei der Stagnationstemperatur kleiner oder gleich 5% Transparenz ist, gemessen nach ISO 9060:1990.

14. Verfahren nach einem der Ansprüche 9-13, wobei die erste Schicht (10) und die zweite Schicht (20) ein polymeres Material umfassen, das aus Polyester, Polycarbonat, Polystyrol, Poly(methyl methacrylat), Poly(styrol-co-methyl methacrylat), Poly(styrol-co-acrylnitril), Poly(methyl methacrylat-co-styrol-co-acrylnitril) und Kombinationen, die mindestens eines der vorgenannten Materialien umfassen, ausgewählt ist.

15. Verfahren nach einem der Ansprüche 9-14, umfassend ferner das Bereitstellen eines Luftspalts (40) zwischen der zweiten Schicht (20) und dem Solarenergie absorbierenden Substrat (30), wobei das Verfahren ferner das Anordnen des Aktuators (32) in dem Luftspalt (40) umfasst.

## Revendications

1. Collecteur solaire (1) comprenant :
un substrat absorbant l'énergie solaire (30) ;
une première couche (10) et une deuxième couche (20) au-dessus du substrat absorbant l'énergie solaire (30), chacune parmi la première couche (10) et la deuxième couche (20) comprenant des caractéristiques de surface respectives (14, 16) se faisant mutuellement face et définissant une interface (2), les caractéristiques de surface (14, 16) étant configurées pour transmettre une partie sélectionnée de l'énergie solaire à travers l'interface lorsqu'elles sont en alignement mutuel,
**caractérisé en ce que**, lorsque les caractéristiques de surface (14, 16) sont en alignement mutuel, la transmission, mesurée conformément à la norme ISO 9060:1990, est supérieure à ou égale à 80 % ; et
un actionneur (32) couplé au substrat absorbant l'énergie solaire (30) en communication thermique avec le substrat absorbant l'énergie solaire (30), l'actionneur (32) étant couplé mécaniquement avec au moins l'une parmi la première couche (10) et la deuxième couche (20) ;
dans lequel l'actionneur (32) est configuré pour recevoir de l'énergie thermique à partir du substrat absorbant l'énergie solaire (30) et dans lequel l'actionneur est dilaté quand le collecteur solaire (1) est exposé à une température de stagnation pour former un espace (15) entre la première couche (10) et la deuxième couche (20) de façon que les caractéristiques de surface respectives (14, 16) soient déplacées hors de leur alignement avec une transmission de lumière à travers la première couche (10), mesurée conformément à la norme ISO 9060:1990, inférieure ou égale à 10 %.

2. Collecteur solaire (1) selon la revendication 1, dans lequel les caractéristiques de surface respectives (14, 16) comprennent des configurations géométriques complémentaires à l'interface (2) entre la première couche (10) et la deuxième couche (20).

3. Collecteur solaire (1) selon l'une quelconque des revendications 1 et 2, dans lequel chaque configuration géométrique comprend au moins l'une parmi les configurations géométriques trapézoïdale (120), en dents de scie, sinusoïdale (140), lamellaire (150), triangulaire (160), abs(sin) (170), cycloïde (180), et pyramidale.

4. Collecteur solaire (1) selon l'une quelconque des revendications 1 à 3, comprenant en outre une couche intermédiaire (25) située entre la première couche (10) et la deuxième couche (20),
dans lequel la couche intermédiaire (25) comprend un matériau ayant une transmission de lumière égale à la transmission de lumière de la première couche (10).

5. Collecteur solaire (1) selon l'une quelconque des revendications 1 à 4, dans lequel l'actionneur (32) et le substrat absorbant l'énergie solaire (30) ont des coefficients de dilatation thermique identiques, ou
dans lequel l'actionneur (32) a un coefficient de dilatation thermique supérieur au coefficient de dilatation thermique du substrat absorbant l'énergie solaire (30).

6. Collecteur solaire (1) selon l'une quelconque des revendications 1 à 5, dans lequel la transmission de lumière à travers la première couche (10) et la deuxième couche (20), mesurée conformément à la norme ISO 9060:1990 à la température de stagnation, est inférieure ou égale à 5 %.

7. Collecteur solaire (1) selon l'une quelconque des revendications 1 à 6, dans lequel la première couche (10) et la deuxième couche (20) comprennent un matériau polymère choisi parmi un polyester, un polycarbonate, un polystyrène, un poly(méthacrylate de méthyle), un copoly(styrène/méthacrylate de méthyle), un copoly(styrène/acrylonitrile), un copoly(méthacrylate de méthyle/styrène/acrylonitrile), et des combinaisons comprenant au moins l'un des précédents.

8. Collecteur solaire (1) selon l'une quelconque des revendications 1 à 7, comprenant en outre un espace d'air (40) entre la deuxième couche (20) et le substrat absorbant l'énergie solaire (30),
dans lequel l'actionneur (32) est situé dans l'espace d'air (40).

9. Méthode pour contrôler la stagnation dans un collecteur solaire (1), comprenant :
l'obtention d'un substrat absorbant l'énergie solaire (30) et d'une première couche(10) ;
l'obtention d'une deuxième couche (20) disposée entre la première couche (10) et le substrat absorbant l'énergie solaire (30) ;
dans lequel chacune parmi la première couche (10) et la deuxième couche (20) comprennent des caractéristiques de surface respectives (14, 16) se faisant mutuellement face et définissant une interface (2), les caractéristiques de surface (14, 16) étant configurées pour transmettre une partie sélectionnée de l'énergie solaire à travers l'interface lorsqu'elles sont en alignement mutuel,
**caractérisé en ce qu'**il comprend en outre le couplage d'un actionneur (32) au substrat absorbant l'énergie solaire (30) ; et
**en ce que** l'actionneur (32) est dilaté quand le collecteur solaire (1) est exposé à la température de stagnation pour former un espace (15) entre la première couche (10) et la deuxième couche (20) ;
dans lequel, quand lesdites caractéristiques de surface (14, 16) sont en alignement mutuel, la transmission, mesurée conformément à la norme ISO 9060:1990, est supérieure ou égale à 80 %,
et dans lequel, quand les caractéristiques de surface (14, 16) de la première couche (10) et de la deuxième couche (20) sont déplacées hors de leur alignement, la transmission de lumière à travers la première couche (10), mesurée conformément à la norme ISO 9060:1990, est inférieure ou égale à 10 %.

10. Méthode selon la revendication 9, dans lequel les caractéristiques de surface respectives (14, 16) de la première couche (10) et de la deuxième couche (20) comprennent des configurations géométriques complémentaires à l'interface (2) entre la première couche (10) et la deuxième couche (20).

11. Méthode selon l'une quelconque des revendications 9 et 10, dans lequel l'actionneur (32) et le substrat absorbant l'énergie solaire (30) comprennent des coefficients de dilatation thermique identiques.

12. Méthode selon l'une quelconque des revendications 9 à 11, dans lequel la transmission de lumière à travers la première couche (10) et la deuxième couche (20), quand les caractéristiques de surface sont en contact mutuel direct, mesuré conformément à la norme ISO 9060:1990, est supérieure ou égale à 80 % de transmission.

13. Méthode selon l'une quelconque des revendications 9 à 12, dans lequel la transmission de lumière à travers la première couche (10) et la deuxième couche (20) à la température de stagnation, mesurée conformément à la norme ISO 9060:1990, est inférieure ou égale à 5 % de transparence.

14. Méthode selon l'une quelconque des revendications 9 à 13, dans lequel la première couche (10) et la deuxième couche (20) comprennent un matériau polymère choisi parmi un polyester, un polycarbonate, un polystyrène, un poly(méthacrylate de méthyle), un copoly(styrène/méthacrylate de méthyle), un copoly(styrène/acrylonitrile), un copoly(méthacrylate de méthyle/styrène/acrylonitrile), et des combinaisons comprenant au moins l'un des précédents.

15. Méthode selon l'une quelconque des revendications 9 à 14, comprenant en outre la disposition d'un espace d'air (40) entre la deuxième couche (20) et le substrat absorbant l'énergie solaire (30), et comprenant en outre la localisation de l'actionneur (32) dans l'espace d'air (40).
